# EUROPÄISCHE PATENTANMELDUNG

(11) **EP 4 792 910 A1**
(43) Veröffentlichungstag der Anmeldung: **19.08.2026**
(21) Anmeldenummer: 25157320.0
(22) Anmeldetag: 12.02.2025
(51) Int. Cl.: B01D 29/44, B01D 29/64, E02B 8/02

(54) **RECHENANLAGE ZUR MECHANISCHEN ENTFERNUNG VON GROBSTOFFEN AUS EINEM FLÜSSIGKEITSSTROM**

(71) Anmelder: Dück, Dietrich, 53639 Königswinter (DE); Schneider, Valeri, 6300 Zug (CH)
(72) Erfinder: Dück, Dietrich, 53639 Königswinter (DE); Schneider, Valeri, 6300 Zug (CH)
(74) Vertreter: KBN IP Patentanwälte Partnerschaft mbB

(57) **Zusammenfassung**

Die Erfindung betrifft eine Rechenanlage zur mechanischen Entfernung von Grobstoffen aus einem Flüssigkeitsstrom, umfassend einen vom Flüssigkeitsstrom ausgehend von einer Abwasserseite (17) zu einer Reinwasserseite (18) durchströmbaren Rechen (1) mit mehreren voneinander beabstandeten und sich von einem unteren Ende (100) zu einem oberen Ende (101) erstreckenden Rechenstäben (10) und eine Harke (3), die von einem Antrieb (6) bedarfsweise aus einer oberen Position am oberen Ende (101) der Rechenstäbe (10) in eine untere Position am unteren Ende (100) der Rechenstäbe (10) und wieder zurück in die Position am oberen Ende (101) der Rechenstäbe (10) bewegbar ist und eine Vielzahl von Räumelementen (30) umfasst, die jeweils in einen Zwischenraum (11) zwischen benachbarten Rechenstäben (10) eingreifen, wobei alle Räumelemente (30) permanent in dem jeweiligen Zwischenraum (11) zwischen den benachbarten Rechenstäben (10) angeordnet und auf einer gemeinsamen Schwenkachse (33) schwenkbar miteinander verbunden sind und einen von der Schwenkachse (33) zu einem freien Ende (310) sich erstreckenden Räumfinger (31) aufweisen, der bei Bewegung der Harke (3) ausgehend von der Position am oberen Ende (101) in Richtung der Position am unteren Ende (100) parallel zu den Rechenstäben (10) verschwenkbar ist, so dass er auf der Abwasserseite (17) nicht über die Rechenstäbe (10) vorsteht und bei Erreichen der Position am unteren Ende (100) um die Schwenkachse (33) in eine Ausrichtung verschwenkbar ist, in der er auf der Abwasserseite (17) über die Rechenstäbe (10) vorsteht und in dieser Ausrichtung zurück bis in die Position am oberen Ende (101) der Rechenstäbe (10) verfahrbar ist.

## Beschreibung

Die Erfindung betrifft eine Rechenanlage zur mechanischen Entfernung von Grobstoffen aus einem Flüssigkeitsstrom, umfassend einen vom Flüssigkeitsstrom ausgehend von einer Abwasserseite zu einer Reinwasserseite durchströmbaren Rechen mit mehreren voneinander beabstandeten und sich von einem unteren zu einem oberen Ende erstreckenden Rechenstäben und eine Harke, die von einem Antrieb bedarfsweise aus einer oberen Position am oberen Ende der Rechenstäbe in eine untere Position am unteren Ende der Rechenstäbe und wieder zurück in die Position am oberen Ende der Rechenstäbe bewegbar ist und eine Vielzahl von Räumelementen umfasst, die jeweils in einen Freiraum zwischen benachbarten Rechenstäben eingreifen.

Rechenanlagen der eingangs genannten Art sind bekannt, wozu beispielhaft auf die DE 44 06122A1 und die DD111570 verwiesen wird. Derartige Rechenanlagen dienen beispielsweise in Klärwerken dazu, den zugeführten Flüssigkeitsstrom, insbesondere Schmutzwasser, von mitgeführten Grobstoffen zu befreien. Dazu wird der Flüssigkeitsstrom in einer Durchströmrichtung ausgehend von einer Abwasserseite zu einer Reinwasserseite durch den Rechen geleitet, d. h. dieser tritt zwischen den Rechenstäben hindurch, wobei Grobstoffe, deren Abmessungen größer als der Abstand benachbarter Rechenstäbe ist, zurückgehalten werden. Diese zurückgehaltenen Rohstoffe werden sodann periodisch oder kontinuierlich mit der zwischen die Rechenstäbe greifenden Harke entfernt, um einer Verstopfung des Rechens entgegenzuwirken.

Übliche Rechenanlagen verfügen über einen Rechen mit mehreren äquidistant voneinander beabstandeten geraden Rechenstäben, die nach Art eines regelmäßigen Gitters angeordnet sind. Die Harke wird stromaufwärts der Rechenstäbe in den Flüssigkeitsstrom abgesenkt und greift am tiefsten Punkt mit entsprechenden Räumelementen zwischen die Rechenstäbe, um daraufhin parallel zu den Rechenstäben aufwärts angehoben zu werden, wobei die angestauten Grobstoffe mitgenommen werden. Sobald die Harke aus dem Flüssigkeitsstrom nach oben herausgehoben wird, werden auch die mitgenommenen Grobstoffe aus dem Flüssigkeitsstrom entfernt und können beispielsweise über eine entsprechende Übergabeeinrichtung an eine Förderanlage übergeben werden. Anschließend wird die Harke erneut stromaufwärts der Rechenstäbe in den Flüssigkeitsstrom abgesenkt und erneut zwischen die Rechenstäbe geführt. In der Praxis tritt dabei häufiger das Problem auf, dass bei am Rechen anliegenden Grobstoffen oder infolge der Entfernung großer Grobstoffe die Harke ihre ursprüngliche Ausrichtung verliert und das Eingreifen zwischen benachbarten Rechenstäben nicht mehr in der gewünschten Weise stattfindet. Dies zieht regelmäßig eine Betriebsunterbrechung mit entsprechendem Austausch bzw. Neujustierung der Harke nach sich. Außerdem birgt eine solchermaßen bewegte Harke eine große Quetschgefahr für im Flüssigkeitsstrom schwimmende Fische.

Aufgabe der Erfindung ist es, eine Rechenanlage eingangs genannten Art vorzuschlagen, die bei einfachem Aufbau eine besonders effektive Reinigung von Grobstoffen und hohe Dauerzuverlässigkeit bietet und die Nachteile des Standes der Technik überwindet.

Zur Lösung der gestellten Aufgabe wird erfindungsgemäß die Ausgestaltung einer Rechenanlage gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass alle Räumelemente der Harke permanent in dem jeweiligen Zwischenraum zwischen den benachbarten Rechenstäben angeordnet und auf einer gemeinsamen Schwenkachse schwenkbar miteinander verbunden sind und einen von der Schwenkachse zu einem freien Ende sich erstreckenden Räumfinger aufweisen, der bei Bewegung der Harke ausgehend von der Position am oberen Ende in Richtung der Position am unteren Ende parallel zu den Rechenstäben verschwenkbar ist, sodass er auf der Abwasserseite nicht über die Rechenstäbe vorsteht und bei Erreichen der Position am unteren Ende um die Schwenkachse in eine Ausrichtung verschwenkbar ist, in der er auf der Abwasserseite über die Rechenstäbe vorsteht und in dieser Ausrichtung zurück bis in die Position am oberen Ende der Rechenstäbe verfahrbar ist.

Erfindungsgemäß ist es somit vorgesehen, dass alle Räumelemente permanent, d. h. dauerhaft und ohne Unterbrechung während ihres Einsatzes in dem jeweiligen Zwischenraum zwischen benachbarten Rechenstäben angeordnet sind, sodass die Notwendigkeit, die Räumelemente bei Betätigung der Harke in die Zwischenräume einzuführen, entfällt. Die erfindungsgemäße Rechenanlage erhält dadurch eine erheblich höhere Funktionssicherheit, da stets gewährleistet ist, dass sich die Räumelemente zwischen den Rechenstäben befinden. Zudem besteht auch für beispielsweise vor den Rechenstäben aufgehaltene Fische keine Verletzungs- und Quetschgefahr mehr. Um die ungehinderte Verlagerung der zwischen den Rechenstäben befindlichen Räumelemente aus ihrer Position am oberen Ende, die der Warteposition entspricht, zum unteren Ende der Rechenstäbe trotz einer von den Rechenstäben zurückgehaltenen Ansammlung von Grobstoffen zu ermöglichen, werden sämtliche Räumelemente mit ihren Räumfingern so orientiert, dass sie in den jeweiligen Zwischenräumen zwischen den Rechenstäben parallel zu diesen ausgerichtet sind und auf der Abwasserseite nicht über die Rechenstäbe vorstehen. Die Räumfinger können somit in dieser Ausrichtung zwischen den Rechenstäben an den zurückgehaltenen Grobstoffen vorbei zum unteren Ende der Rechenstäbe geführt werden.

Sobald die Räumelemente das untere Ende der Rechenstäbe erreicht haben, werden sie so verschwenkt, dass der Räumfinger auf der Abwasserseite über die Rechenstäbe vorsteht, d. h. er tritt aus dem jeweiligen Zwischenraum zwischen den benachbarten Rechenstäben zur Abwasserseite hin hervor und kann sodann die zurückgehaltenen Grobstoffen in der an sich bekannten Weise bei dem Rückweg der Harke aus der Position am unteren Ende zum oberen Ende der Rechenstäbe mitnehmen und am oberen Ende in eine geeignete Übergabeeinrichtung übergeben. Anschließend kann die Harke mit ihren Räumelementen wieder in die Ausgangsposition überführt werden, in welcher die Räumfinger parallel zu den Rechenstäben ausgerichtet sind und der Vorgang beginnt aufs Neue.

Je nach Ausführungsform der erfindungsgemäßen Rechenanlage kann die Harke mit ihren stets im jeweiligen Zwischenraum zwischen benachbarten Rechenstäben verbleibenden Räumelementen kontinuierlich zwischen dem oberen Ende und dem unteren Ende der Rechenstäbe umlaufen und durch Verschwenken der Räumfinger die zurückgehaltenen Grobstoffe in der bereits beschriebenen Weise aus dem Flüssigkeitsstrom herausfördern oder aber die Harke wird intermittierend zum Beispiel nach Maßgabe empirisch festgelegter Zeitintervalle in Bewegung gesetzt oder bedarfsweise zum Beispiel durch Vergleich der Flüssigkeitsniveaus im Flüssigkeitsstrom auf der Abwasserseite und der Reinwasserseite gesteuert. Sobald sich eine größere Anzahl an Grobstoffen auf der Abwasserseite vor der erfindungsgemäßen Rechenanlage aufstaut, steigt das Flüssigkeitsniveau auf der Abwasserseite im Vergleich zur Reinwasserseite an, was zum Beispiel durch entsprechende Sensoren überwacht werden kann und die Betätigung der Harke auslöst.

Nach einem Vorschlag der Erfindung umfasst der Antrieb der Harke beidseits des Rechens je einen Zugmitteltrieb, die bevorzugt synchron angetrieben werden und zwischen je einer am oberen Ende des Rechens angeordneten oberen Umlenkrolle und einer am unteren Ende des Rechens angeordneten unteren Umlenkrolle endlos umlaufen. Für die Übertragung der Bewegung des Zugmitteltrieb bis auf die Harke sowie zum Verschwenken der Räumelemente bzw. deren Räumfingern aus der parallel zu den Rechenstäben ausgerichteten Orientierung in eine abwasserseitig über die Rechenstäbe vorstehende Position und wieder zurück in die parallel ausgerichtete Orientierung ist die Schwenkachse an ihren axialen Enden mit einem Schwenkhebel verbunden, der seinerseits schwenkbar mit dem jeweiligen Zugmittel verbunden ist und mit diesem umläuft. Die Schwenkachse stellt sicher, dass sich alle Räumelemente synchron mit der Schwenkachse bewegen, d.h. sowohl entlang des Zugmittels und der Rechenstäbe als auch in Verschwenkrichtung.

Der Schwenkhebel kann nach einem weiteren Vorschlag der Erfindung einen Rahmen mit zwei voneinander beabstandeten Stützrollen aufweisen, von denen eine Stützrolle bei parallel zu den Rechenstäben ausgerichteten Räumfingern auf einer sich parallel zum Zugmitteltrieb erstreckenden Stützschiene abrollt und bei über die Abwasserseite vorstehender Ausrichtung der Räumfinger beide Stützrollen auf der Stützschiene abrollen.

Der Zugmitteltrieb kann nach einer bevorzugten Ausführungsform der Erfindung als Kettentrieb mit Kettenritzeln als Umlenkrollen ausgebildet sein und der Schwenkhebel kann über einen Zapfen mit einem Kettenglied des Kettentriebes verbunden sein. Ein solcher Kettentrieb kann hohe Zugkräfte bei geringem Widerstand aufbringen und ist überdies sehr unempfindlich gegenüber Verschmutzungen.

Nach einem weiteren Vorschlag der Erfindung weist jedes Räumelement an seinem dem Räumfinger abgewandten Ende einen Abstreifer auf, der bei parallel zu den Rechenstäben verschwenkten Räumfingern auf der Abwasserseite über die Rechenstäbe vorsteht. Mit einem solchen Abstreifer können die Räumelemente während ihrer Bewegung aus der oberen Position am oberen Ende der Rechenstäbe zur unteren Position am unteren Ende der Rechenstäbe die vor den Rechenstäben befindlichen Rohstoffe bereits lockern und zwischen den Rechenstäben verklemmte Grobstoffe wieder in Richtung der Abwasserseite herausdrücken, sodass sie anschließend von den verschwenkten und über die Rechenstäbe auf der Abwasserseite vorstehenden Räumfingern zuverlässig mitgenommen werden. Alle Räumfinger können zudem über ein gemeinsames Rampenprofil, z.B. ein sich über alle Räumfinger parallel zur Schwenkachse erstreckendes Blechprofil, miteinander verbunden sein.

Zur weiteren Steigerung der Funktionssicherheit können nach einem Vorschlag der Erfindung die Rechenstäbe an ihrem unteren Ende bogenförmig in Richtung der Abwasserseite gekrümmt sein, wobei der Krümmungsradius zumindest annähernd dem Radius entspricht, den die freien Enden der Räumfinger beim Verschwenken aus der zu den Rechenstäben parallelen Ausrichtung in die über die Rechenstäbe auf der Abwasserseite vorstehende Ausrichtung beschreiben. Auf diese Weise wird eine besonders gleichförmiges und allmähliches Heraustreten der Räumfinger aus den Zwischenraum zwischen den Rechenstäben gewährleistet, was einer zuverlässigen Mitnahme der aufgehaltenen Grobstoffe dienlich ist.

Nach einem weiteren Vorschlag der Erfindung sind die Rechenstäbe aus Flachstäben gebildet, deren kürzeste Seite der Abwasserseite zugewandt ist, sodass sie einen besonders Form stabilen Rechen ausbilden, der auch größere und schwerere Grobstoffe zuverlässig und ohne Gefahr von Verformungen zurückhalten kann.

Eine weitere Steigerung der Rückhaltefähigkeit bei gleichzeitig einfacher Reinigung von Grobstoffen wird dadurch erreicht, dass die Rechenstäbe ausgehend von der Abwasserseite zur Reinwasserseite konisch verjüngend ausgebildet sind.

Zur weiteren Steigerung der mechanischen Festigkeit der erfindungsgemäßen Rechenanlage wird vorgeschlagen, dass die Rechenstäbe auf der Reinwasserseite mittels Querstreben miteinander verbunden sind. Die Bewegung der Räumelemente in den Zwischenräumen zwischen benachbarten Rechenstäben wird durch die Anordnung der Querstreben auf der Reinwasserseite nicht behindert.

Schließlich ist nach einer bevorzugten Ausführungsformen der Erfindung vorgesehen, dass alle Rechenstäbe voneinander gleiche Abstände aufweisen.

Weitere Ausgestaltungen und Einzelheiten der Erfindung werden nun anhand eines Ausführungsbeispiels in der Zeichnung näher erläutert. Es zeigen:
- Figur 1: eine Querschnittsansicht eines Strömungskanals für einen Flüssigkeitsstrom mit darin eingesetzter Rechenanlage gemäß der Erfindung, betrachtet von der Abwasserseite her;
- Figur 2: die Seitenansicht der Rechenanlage gemäß Figur 1 entlang der Linie A-A in Figur 1;
- Figur 3a bis 3d: sequenziell aufeinanderfolgende Darstellungen der Bewegung und Funktion der Harke im Bereich des unteren Endes der Rechenstäbe der erfindungsgemäßen Rechenanlage;
- Figur 4a: ein Räumelement gemäß der Erfindung in einer ersten Ausrichtung;
- Figur 4b: das Räumelement gemäß Figur 4a in einer zweiten Ausrichtung;
- Figur 5: die Seitenansicht eines Schwenkhebels der erfindungsgemäßen Rechenanlage;
- Figur 6: eine weitere Ansicht der Rechenanlage gemäß der Erfindung im Bereich des unteren Ende der Rechenstäbe;
- Figur 7: eine weitere Ansicht der Rechenanlage gemäß der Erfindung im Bereich des unteren Ende der Rechenstäbe.

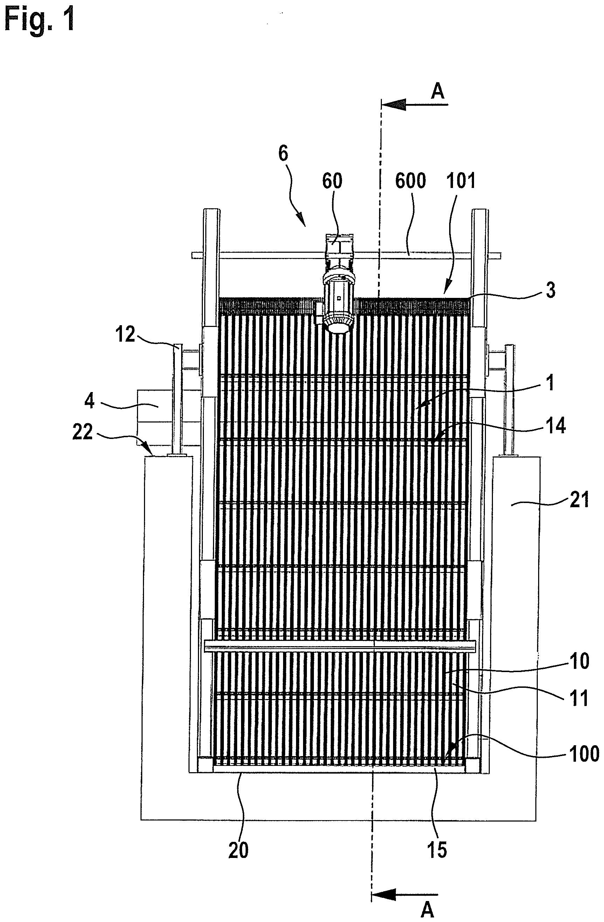

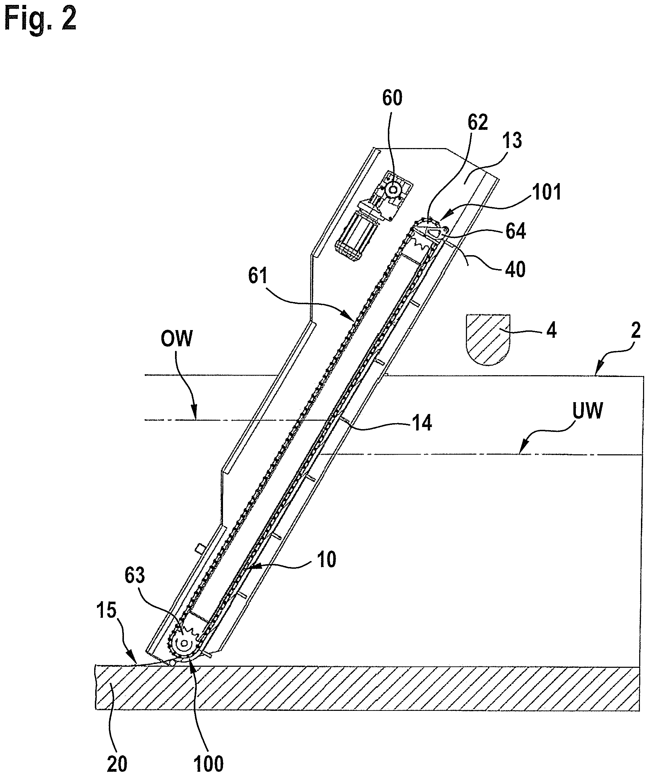

Aus den Figuren 1 und 2 ist eine Rechenanlage zur mechanischen Entfernung von Grobstoffen aus einem Flüssigkeitsstrom ersichtlich, die in einen der Führung des Flüssigkeitsstroms dienenden Kanal 2 eingesetzt ist. Bei dem Flüssigkeitsstrom kann es sich beispielsweise um ungeklärtes Abwasser handeln, welches durch den Kanal 2 einer Kläranlage zugeführt wird.

Wie aus der Darstellung gemäß Figur 2 ersichtlich, ist die Rechenanlage unter einem Winkel zwischen etwa 45 und 90° geneigt in den Kanal 2 eingesetzt, wobei der Kanal von einem Kanalboden 20 und Seitenwänden 21 begrenzt wird und insoweit einen etwa U-förmigen Querschnitt aufweist.

Die Rechenanlage ist mit einer auf der Oberseite 22 der Seitenwand 21 angeordneten Halterung 12 in den Kanal 2 teilweise eintauchend gehaltert, wobei der Neigungswinkel, wie er aus der Figur 2 ersichtlich ist, einstellbar ist, um die nachfolgend noch erläuterte Filtrationsfläche bzw. Durchflussleistung der Rechenanlage einzustellen.

Die Rechenanlage umfasst eine Vielzahl von mit gleichem Abstand voneinander angeordneten und sich im Wesentlichen geradlinig erstreckenden Rechenstäben 10, die eine Art Gitterrost bilden und zwischen denen Zwischenräume 11 gleicher Breite für den Durchtritt der im Kanal 2 geführten Flüssigkeit ausgebildet sind. Die Rechenstäbe 10 bilden insoweit einen Rechen 1, mit welchem im Flüssigkeitsstrom innerhalb des Kanals 2 mitgeführte Grobstoffe, beispielsweise Äste, Steine, Textilien, Papier und andere größere Verunreinigungen zurückgehalten werden können, da diese nicht durch die Zwischenräume 11 zwischen den Rechenstäben 10 hindurchtreten können. Der Rechen 1 unterteilt insoweit den der Führung des Flüssigkeitsstroms dienenden Kanal 2 in eine Abwasserseite 17 stromaufwärts des Rechens 1 und eine Reinwasserseite 18 stromabwärts des Rechens 1. In der Darstellung gemäß Figur 2 ist die Abwasserseite 17 linksseitig der Rechenanlage und die Reinwasserseite 18 rechtsseitig der Rechenanlage dargestellt.

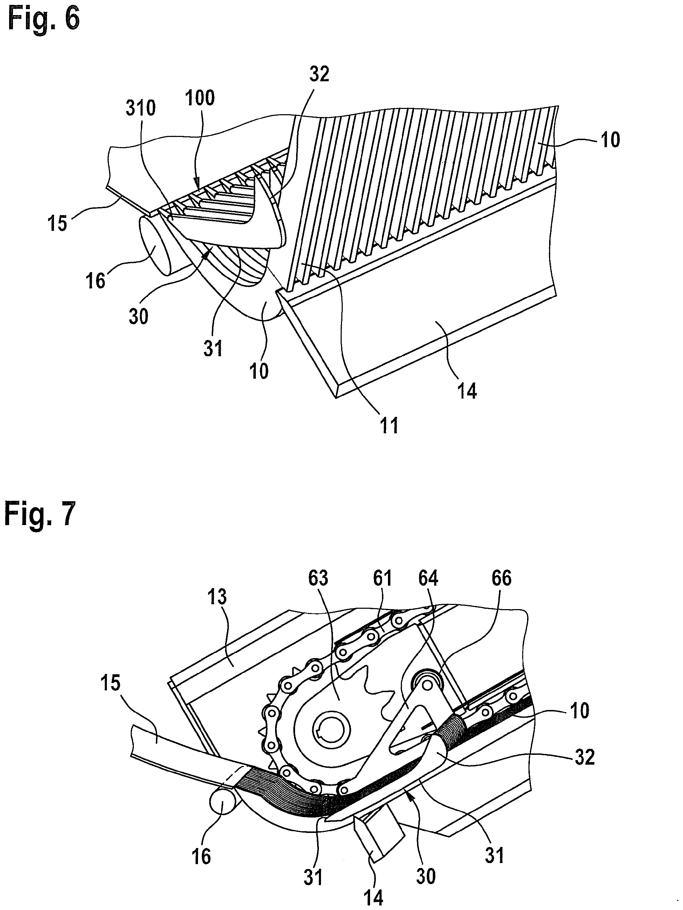

Die Rechenstäbe 10 sind auf der Reinwasserseite 18 über mehrere in gleichen Abständen zueinander verlaufende horizontale Querstreben 14 miteinander verbunden, die in näheren Einzelheiten aus der Figur 6 ersichtlich sind. Die Querstreben 14 sind dazu in entsprechenden keilförmigen Ausnehmungen der Rechenstäbe 10 fixiert, beispielsweise verschweißt.

Die solchermaßen zu einem festen Gitter verbundenen Rechenstäbe 10 verlaufen im Wesentlichen geradlinig und mit gleichem Abstand voneinander ausgehend von einem oberen Ende 101 zu einem unteren Ende 100, welches über ein Abschlussblech 15 und eine Stützstrebe 16 auf dem Kanalboden 20 aufgesetzt ist, sodass die Rechenanlage zum Kanalboden 20 hin abgedichtet ist. An ihrem unteren Ende 100 sind zudem die Rechenstäbe 10 übereinstimmend bogenförmig in Richtung der Abwasserseite 17 gekrümmt und enden spitz auslaufend in einem Abstand von beispielsweise etwa 50 mm über dem Kanalboden 20, sodass eine bodennahe Strömung ungehindert durch die Rechenstäbe 10 gelangen kann und so etwaige Sandablagerungen hinter die Rechenanlage transportieren kann.

Da die von der Rechenanlage zurückgehaltenen Grobstoffe sich zwangsläufig auf der Abwasserseite 17 vor den Rechenstäben 10 anstauen, müssen diese Grobstoffe regelmäßig und vorzugsweise bedarfsgesteuert aus dem Kanal 2 entfernt werden, da ansonsten der Flüssigkeitsstrom aufgestaut würde und vor der Rechenanlage über den Kanal 2 überlaufen würde.

Zu diesem Zweck ist eine Harke 3 vorgesehen, die beispielsweise bedarfsabhängig von einem Antriebsmotor 60 aktiviert und angetrieben werden kann. Die bedarfsabhängige Aktivierung kann beispielsweise gemäß Darstellung in der Figur 2 über einen Vergleich der Flüssigkeitsniveaus im Kanal auf der Abwasserseite 17 und der Reinwasserseite 18 erfolgen. Sobald durch zurückgehaltene Grobstoffe der Flüssigkeitsdurchfluss durch die Rechenanlage behindert wird, steigt der Flüssigkeitsspiegel OW auf der Abwasserseite 17 gegenüber dem Flüssigkeitsspiegel UW auf der Reinwasserseite 17 an, was durch entsprechende Sensoren ausgewertet und bei Überschreiten eines vorgebbaren Differenzbetrages zur Aktivierung des Antriebsmotors 60 für den Rechen 3 führen kann.

Im Ausgangszustand ist der Rechen 3 gemäß der Darstellung in der Figur 1 außerhalb des Flüssigkeitsspiegels im Kanal 2 am oberen Ende 101 der Rechenstäbe 10 in einer Warteposition angeordnet.

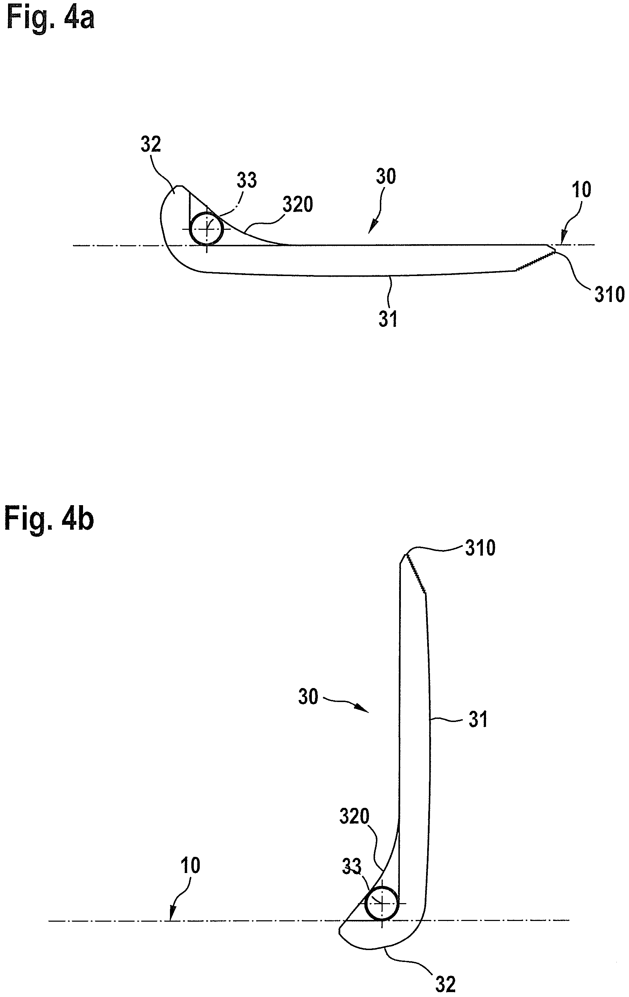

Der Rechen 3 setzt sich aus einer Vielzahl von Räumelementen 30 zusammen, die näheren Einzelheiten aus den Figuren 4a, 4b sowie 6 und 7 ersichtlich sind. Jedes einzelne Räumelement 30 weist eine an die Breite eines Zwischenraums 11 zwischen benachbarten Rechenstäben 10 angenäherte Breite auf, sodass jeweils ein derartiges Räumelement 30 in einen Zwischenraum zwischen zwei benachbarten Rechenstäben 10 eingebracht werden kann und dort permanent verbleibt. Dabei weist in der Position des Rechens 3 am oberen Ende 101 ein länglicher am Räumelement 30 ausgebildeter Räumfinger 31 mit seinem freien Ende 310 in Richtung des unteren Endes 100 der Rechenstäbe 10 und verläuft in einer Ausrichtung parallel zu den Rechenstäben 10 gemäß der Darstellung in der Figur 4a, sodass der Räumfinger 31 auf der Abwasserseite 17 nicht über die Rechenstäbe 10 vorsteht, sondern sich ausschließlich im Zwischenraum 11 zwischen den jeweiligen benachbarten Rechenstäben 10 erstreckt.

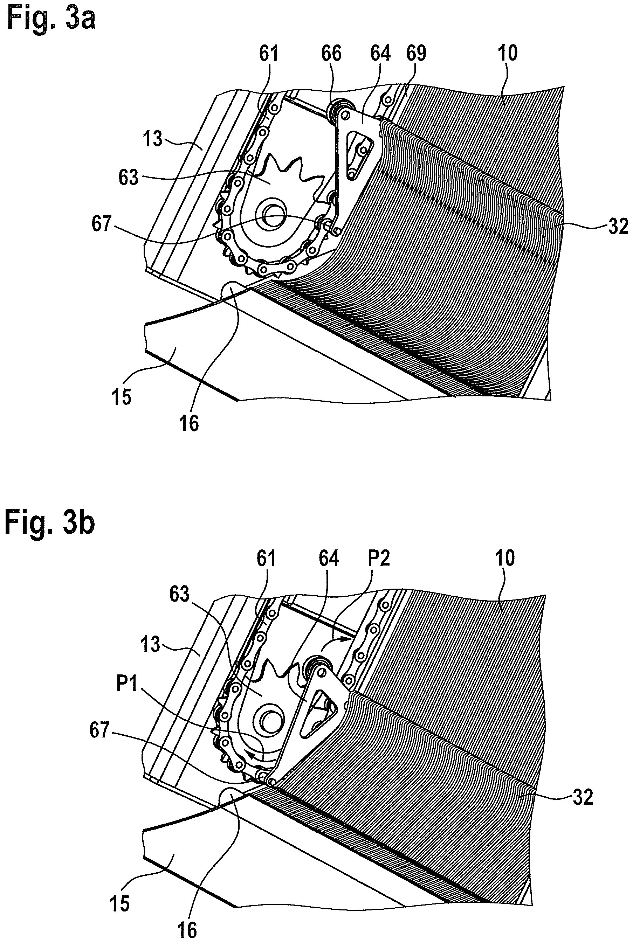

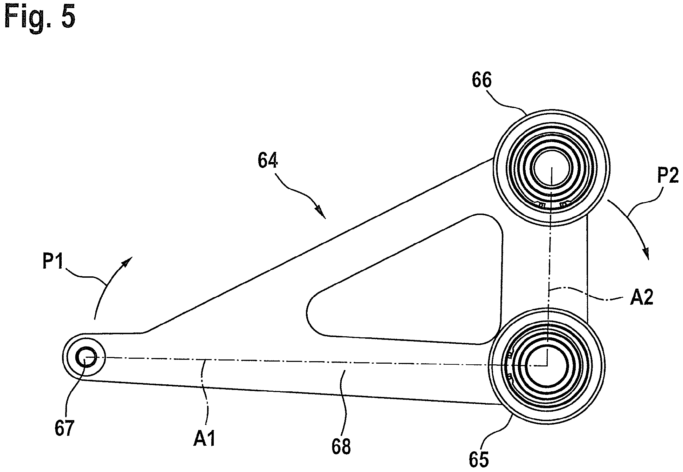

Sämtliche in den jeweiligen Zwischenräumen 11 angeordnete und gleich ausgerichtete Räumelemente 30 sind auf einer sich quer zu den Rechenstäben 11 erstreckenden Schwenkachse 33 aufgereiht und schwenkbar mit dieser verbunden. Wie insbesondere aus den Darstellungen gemäß Figuren 3a bis 3d sowie 6 und 7 ersichtlich, überragt die Schwenkachse 33 in Breitenrichtung die gesamte Breite der Rechenstäbe 10 des Rechens 1 und endet jeweils in einem in näheren Einzelheiten auch aus der Figur 5 ersichtlichen Schwenkhebel 64. Dieser Schwenkhebel 64 weist eine etwa dreieckförmige Gestaltung auf und umfasst zwei in der Darstellung gemäß Figur 5 mit A1 und A2 gekennzeichnete Hauptachsen, die etwa rechtwinklig zueinander ausgerichtet sind. Die Hauptachse A1 verläuft parallel zu den Räumfingern 31 der auf der Schwenkachse 33 angeordneten und über die Schwenkachse 33 miteinander verbundenen Räumelemente 30. Die Hauptachse A1 wird an einem vorderen Ende des Schwenkhebels 64 von einem quer verlaufenden Zapfen 67 in einer entsprechenden Bohrung und am hinteren Ende von einer schwenkbaren Anbindung der Schwenkachse 33 begrenzt, wobei auf der gegenüberliegenden Seite des Schwenkhebels 64 im Bereich der Anbindung der Schwenkachse 33 zudem eine erste Stützrolle 65 drehbar gelagert ist. Diese Stützrolle 65 begrenzt zudem ein Ende der rechtwinklig zur Hauptachse A1 verlaufenden weiteren Hauptachse A2, die an ihrem anderen Ende eine weitere Stützrolle 66 trägt.

Für die Bewegung der Harke 3 ist ausgehend vom Antriebsmotor 60 und einer sich zu beiden Seiten erstreckenden Antriebswelle 600 zu beiden Seiten des Rechens 1 jeweils ein Kettentrieb 61 vorgesehen, der zwischen einem am oberen Ende 101 der Rechenstäbe 10 angeordneten oberen Kettenritzel 62 und einem am unteren Ende 100 der Rechenstäbe 10 angeordneten durchmesser- und zahngleichen unteren Kettenritzel 63 endlos umläuft, sobald der Antriebsmotor 60 über die Antriebswelle 600 die oberen Kettenritzel 62 synchron antreibt. Der gesamte Kettentrieb 61 ist in seitlichen Seitenplatten 13 angeordnet.

Der Schwenkhebel 64 ist mit seinem querverlaufenden Zapfen 67 an einem Kettenglied des Kettentriebes 61 fixiert und läuft mit diesem Kettenglied endlos um. Man erkennt aus einer vergleichenden Betrachtung der Darstellung in den Figuren 2 und 3a, dass der Schwenkhebel 64 ausgehend von der Position der Harke 3 am oberen Ende 101 der Rechenstäbe 10 zunächst mit dem Kettentrieb entlang des in der Darstellung gemäß Figur 3a unteren Kettentrums in Richtung des unteren Endes 100 der Rechenstäbe 10 bewegt wird, wobei sämtliche auf der Schwenkachse 33 angeordnete Räumelemente so orientiert sind, dass die Räumfinger 31 parallel zu den Rechenstäben 10 in den jeweiligen Zwischenräumen 11 angeordnet sind und nicht in Richtung der Abwasserseite 17 hervorstehen.

Sobald sich der Schwenkhebel 64 mit seinem am voreilenden Ende angeordneten und mit dem Kettentrieb 61 verbundenen Zapfen 67 dem unteren Ritzel 63 nähert und auf dieses aufläuft, bewegt sich der Zapfen 67 mit dem daran befestigten Schwenkhebel 64 auf der kreisbogenförmigen Umschlingungsbahn um das untere Kettenritzel 63 mit, sodass der Schwenkhebel 64 gemäß der sequenziell aufeinanderfolgenden Darstellung in den Figuren 3b bis 3d mit seinem voreilender Ende allmählich gemäß Pfeil P1 angehoben, während die Stützrolle 66 allmählich die Gegenbewegung in Pfeilrichtung P2 vollführt, da die andere Stützrolle 65 auf einer Stützschiene 69 verläuft und insoweit als Drehpunkt für den Schwenkhebel 64 dient. Schlussendlich wird der Schwenkhebel 64 um 90 Grad verschwenkt, bis beide Stützrollen 65, 66 auf der Stützschiene 69 abrollen. Die Länge der Achse A1 entspricht daher dem Durchmesser der Ritzel 62, 63.

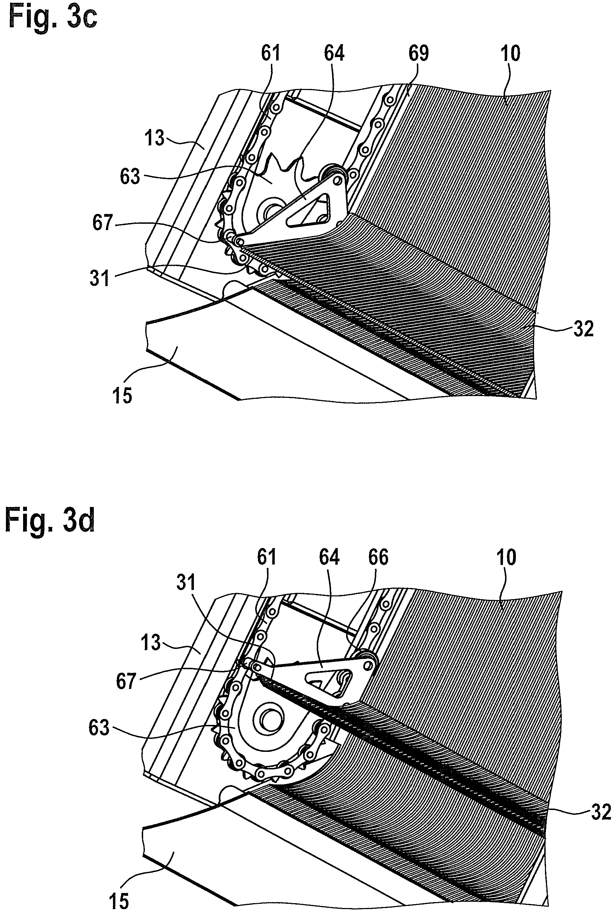

Mit der solchermaßen bewirkten Verschwenkung des Schwenkhebels 64 werden auch die daran befestigte Schwenkachse 33 und mit dieser die auf der Schwenkachse 33 aufgereihten und sich im Zwischenraum 11 zwischen benachbarten Rechenstäben 10 befindlichen Räumelemente 30 synchron gemäß Pfeil P1 um 90 Grad verschwenkt, sodass die freien Enden 310 der Räumfinger 31 dem bogenförmigen Verlauf der Rechenstäbe 10 im Bereich des unteren Endes 100 folgen, bis sie letztlich gemäß Darstellung in den Figuren 3c und 3d im Bereich des unteren Endes 100 aus den Zwischenräumen 11 zwischen benachbarten Rechenstäben 10 heraustreten und eine Konfiguration einnehmen, in der sie auf der Abwasserseite 17 über die Rechenstäbe 10 vorstehen. Sobald der Zapfen 67 vollständig um das untere Ritzel 63 umgelaufen ist, wie in Figur 3d dargestellt, erstrecken sich die Räumfinger 31 im Wesentlichen rechtwinklig zu den Rechenstäben 10 und stehen entsprechend auf der Abwasserseite 17 hervor.

Die in den Zwischenräumen 11 zwischen den Rechenstäben 10 angeordneten und zunächst auf der Abwasserseite 17 nicht über den Rechen 1 vorstehenden Räumfinger 31 der Räumelemente 30 gleiten insoweit permanent in den Zwischenräumen 11 in Strömungsrichtung betrachtet hinter den zurückgehaltenen Grobstoffen in den Zwischenräumen 11 des Rechens 1 bis zum Erreichen des unteren Endes 100 und werden dort in eine zur Abwasserseite 17 vorstehende Konfiguration aufgerichtet. Anschließend werden sie, solange der Zapfen 67 entlang des oberen Kettentrums bis zum oberen Kettenritzel 62 verläuft, in dieser vorstehenden Orientierung vom unteren Ende 100 zum oberen Ende 101 der Rechenstäbe 10 geführt und sind damit in der Lage, die von den Rechenstäben 10 zurückgehaltenen Grobstoffe in Richtung des oberen Endes 101 des Rechens 1 und seinen Rechenstäben 10 mitzuführen. Beim Erreichen des oberen Endes 101 gelangen die mitgeführten Grobstoffe über ein Abwurfblech 40 in eine Austragsrinne 4, von wo sie einer weiteren Entsorgung zugeführt werden. Anschließend wird mit Umlauf des Zapfens 67 um das obere Kettenritzel 62 der Schwenkhebel 64 wieder in seine Ausgangsposition um 90 Grad zurück verschwenkt, in der die Räumfinger 31 parallel zu den Rechenstäben 10 angeordnet und ausgerichtet werden und auf der Abwasserseite 17 nicht über die Rechenstäbe 10 vorstehen und der Vorgang beginnt von neuem. Im Bereich des oberen Endes 101 können zudem Abstreifer, Bürsten oder auch Sprühdüsen angeordnet sein, um die Grobstoffe in Richtung des Abwurfbleches 40 abzustreifen.

Man erkennt ferner, dass neben dem Räumfinger 31 im Bereich jedes Räumelementes 30 nahe der Schwenkachse 33 eine sich etwa rechtwinklig zum Räumfinger 31 erstreckender Abstreifer 32 ausgebildet ist. Die Orientierung ist so gewählt, dass bei paralleler Ausrichtung des Räumfingers 31 im Zwischenraum 11 zwischen benachbarten Rechenstäben 10 zum Beispiel gemäß Darstellung in der Figur 3a der Räumfinger 31 nicht auf der Abwasserseite 17 über die Rechenstäbe vorsteht, der Abstreifer 32 hingegen auf der Abwasserseite 17 hervorsteht. Dies hat zur Folge, dass bei der Bewegung der Räumelemente aus der Position gemäß Figur 1 in Richtung des unteren Endes 100 der Rechenstäbe 10 eventuell im Zwischenraum zwischen den Rechenstäben 10 verklemmte Grobstoffe von den Abstreifern 32 bereits gelockert und in Richtung der Abwasserseite 17 aus dem Rechen 1 herausgedrückt werden, damit sie anschließend bei der Aufwärtsbewegung der Harke 3 zuverlässig mitgenommen werden können. Die Abstreifer 32 können zudem entlang ihrer der Abwasserseite 17 zugewandten Oberfläche über ein flaches Rampenprofil 320, z.B. einen entsprechend ausgeformten Blechstreifen, miteinander verbunden sein.

Es ist ein wesentlicher Vorteil der vorangehend beschriebenen Anordnung, dass zu jedem Betriebszeitpunkt die Räumelemente 30 der Harke 3 stets in den Zwischenräumen 11 zwischen benachbarten Rechenstäben 10 angeordnet sind, sodass sie nicht in die Zwischenräume aktiv eingeführt werden müssen. Es wird lediglich die Orientierung der Räumfinger 31 verändert, in dem diese aus einer zunächst parallelen Ausrichtung zu den Rechenstäben 10 beim Erreichen des unteren Endes 100 derselben in eine nicht parallele und auf der Abwasserseite 17 vorstehende Ausrichtung verschwenkt werden, wobei jedoch während der gesamten Verschwenkbewegung das Räumelement 30 im Zwischenraum 11 zwischen den Rechenstäben 10 verbleibt.

Die bei der Bewegung vom unteren Ende 100 zum oberen Ende 101 abwasserseitig über die Rechenstäbe 10 vorstehenden Räumfinger 31 sind überdies in der Lage, auch größere Mengen an Grobstoffen mit entsprechend hohem Gewicht zuverlässig in Richtung des oberen Endes 101 zu befördern, da durch die Verschwenkung des Schwenkhebels 64 in Pfeilrichtung P1 und die anschließende Aufwärtsbewegung in Richtung des oberen Endes 101 nicht nur die Stützrolle 65, sondern auch durch die Gegenbewegung in Pfeilrichtung P2 die weitere Stützrolle 66 auf der Stützschiene 69 aufgesetzt wird und als Gegenlager für die von den Räumfingern 31 geförderten Grobstoffe dient. Mit anderen Worten ist die Stützrolle 65 unabhängig von der Position des Schwenkhebels 64 permanent in Kontakt mit der Stützschiene 69, während die weitere Stützrolle 66 lediglich bei abwasserseitig vorstehenden Räumfingern 31 zusätzlich auf die Stützschiene 69 aufgesetzt wird und auf dieser abrollt.

Neben der vorangehend erläuterten hohen Förderleistung und Betriebssicherheit der solchermaßen ausgestalteten Rechenanlage weist diese den weiteren Vorteil auf, dass beispielsweise vor den Rechenstäben 10 auf der Abwasserseite 17 festgehaltene Fische von der Harke 3 nicht gequetscht oder auf sonstige Weise verletzt werden können.

Die Rechenstäbe 10 sind zudem vorzugsweise aus Flachstäben gebildet, deren kürzeste Seite der Abwasserseite 17 zugewandt ist. Ein konisches Profil, welches sich ausgehend von der Abwasserseite 17 zur Reinwasserseite 18 verjüngt, trägt zu einer weiteren Verbesserung der Filtrationswirkung bei.

### Bezugszeichenliste:

- 1:: Rechen
- 2:: Kanal
- 3:: Harke
- 4:: Austragsrinne
- 6:: Antrieb
- 10:: Rechenstäbe
- 11:: Zwischenraum
- 12:: Halterung
- 13:: Seitenplatte
- 14:: Querstreben
- 15:: Abschlussblech
- 16:: Stützstrebe
- 17:: Abwasserseite
- 18:: Reinwasserseite
- 20:: Kanalboden
- 21:: Seitenwand
- 22:: Oberseite
- 30:: Räumelement
- 31:: Räumfinger
- 32:: Abstreifer
- 33:: Schwenkachse
- 40:: Abwurfblech
- 60:: Antriebsmotor
- 61:: Kettentrieb
- 62:: oberes Ritzel
- 63:: unteres Ritzel
- 64:: Schwenkhebel
- 65:: erste Stützrolle
- 66:: zweite Stützrolle
- 67:: Zapfen
- 68:: Rahmen
- 69:: Stützschiene
- 100:: unteres Ende
- 101:: oberes Ende
- 310:: freies Ende
- 320:: Rampenprofil
- 600:: Antriebswelle

- UW:: untere Wasserlinie
- OW:: obere Wasserlinie

## Patentansprüche

1. Rechenanlage zur mechanischen Entfernung von Grobstoffen aus einem Flüssigkeitsstrom, umfassend einen vom Flüssigkeitsstrom ausgehend von einer Abwasserseite (17) zu einer Reinwasserseite (18) durchströmbaren Rechen (1) mit mehreren voneinander beabstandeten und sich von einem unteren Ende (100) zu einem oberen Ende (101) erstreckenden Rechenstäben (10) und eine Harke (3), die von einem Antrieb (6) bedarfsweise aus einer oberen Position am oberen Ende (101) der Rechenstäbe (10) in eine untere Position am unteren Ende (100) der Rechenstäbe (10) und wieder zurück in die Position am oberen Ende (101) der Rechenstäbe (10) bewegbar ist und eine Vielzahl von Räumelementen (30) umfasst, die jeweils in einen Zwischenraum (11) zwischen benachbarten Rechenstäben (10) eingreifen, **dadurch gekennzeichnet, dass** alle Räumelemente (30) permanent in dem jeweiligen Zwischenraum (11) zwischen den benachbarten Rechenstäben (10) angeordnet und auf einer gemeinsamen Schwenkachse (33) schwenkbar miteinander verbunden sind und einen von der Schwenkachse (33) zu einem freien Ende (310) sich erstreckenden Räumfinger (31) aufweisen, der bei Bewegung der Harke (3) ausgehend von der Position am oberen Ende (101) in Richtung der Position am unteren Ende (100) parallel zu den Rechenstäben (10) verschwenkbar ist, so dass er auf der Abwasserseite (17) nicht über die Rechenstäbe (10) vorsteht und bei Erreichen der Position am unteren Ende (100) um die Schwenkachse (33) in eine Ausrichtung verschwenkbar ist, in der er auf der Abwasserseite (17) über die Rechenstäbe (10) vorsteht und in dieser Ausrichtung zurück bis in die Position am oberen Ende (101) der Rechenstäbe (10) verfahrbar ist.

2. Rechenanlage nach Anspruch 1, **dadurch gekennzeichnet, dass** der Antrieb (6) beidseits des Rechens je einen Zugmitteltrieb umfasst, der zwischen einer am oberen Ende (101) des Rechens (10) angeordneten oberen Umlenkrolle und einer am unteren Ende (100) des Rechens (10) angeordneten unteren Umlenkrolle endlos umläuft und die Schwenkachse (33) an ihren axialen Enden mit einem Schwenkhebel (64) verbunden ist, der schwenkbar mit dem jeweiligen Zugmittel verbunden ist.

3. Rechenanlage nach Anspruch 2, **dadurch gekennzeichnet, dass** der Schwenkhebel (64) einen Rahmen (68) mit zwei voneinander beabstandeten Stützrollen (65, 66) aufweist, von denen eine Stützrolle (65) bei parallel zu den Rechenstäben (10) ausgerichteten Räumfingern (31) auf einer sich parallel zum Zugmitteltrieb erstreckenden Stützschiene (69) abrollt und bei über die Abwasserseite (17) vorstehender Ausrichtung der Räumfinger (31) beide Stützrollen (65, 66) auf der Stützschiene (69) abrollen.

4. Rechenanlage nach einem der Ansprüche 2 oder 3, **dadurch gekennzeichnet, dass** der Zugmitteltrieb als Kettentrieb (61) mit Kettenritzeln (62, 63) als Umlenkrollen ausgebildet ist und der Schwenkhebel (64) über einen Zapfen (67) mit einem Kettenglied des Kettentriebes (61) verbunden ist.

5. Rechenanlage nach einem der Ansprüche 1 bis 4, **dadurch gekennzeichnet, dass** jedes Räumelement (30) an seinem dem Räumfinger (31) abgewandten Ende einen Abstreifer (32) aufweist, der bei parallel zu den Rechenstäben (10) verschwenkten Räumfingern (31) auf der Abwasserseite (17) über die Rechenstäbe (10) vorsteht.

6. Rechenanlage nach einem der Ansprüche 1 bis 5, **dadurch gekennzeichnet, dass** die Rechenstäbe (10) an ihrem unteren Ende (100) bogenförmig in Richtung der Abwasserseite (17) gekrümmt sind und der Krümmungsradius dem Radius entspricht, den die freien Enden (310) der Räumfinger (31) beim Verschwenken aus der zu den Rechenstäben (10) parallelen Ausrichtung in die über die Abwasserseite (17) vorstehende Ausrichtung beschreiben.

7. Rechenanlage nach einem der Ansprüche 1 bis 6, **dadurch gekennzeichnet, dass** die Rechenstäbe (10) aus Flachstäben gebildet sind, deren kürzeste Seite der Abwasserseite (17) zugewandt ist.

8. Rechenanlage nach Anspruch 7, **dadurch gekennzeichnet, dass** die Rechenstäbe (1) ausgehend von der Abwasserseite (17) zur Reinwasserseite (18) konisch verjüngend ausgebildet sind.

9. Rechenanlage nach einem der Ansprüche 1 bis 8, **dadurch gekennzeichnet, dass** die Rechenstäbe (10) auf der Reinwasserseite (18) mittels Querstreben (14) miteinander verbunden sind.

10. Rechenanlage nach einem der Ansprüche 1 bis 9, **dadurch gekennzeichnet, dass** alle Rechenstäbe (10) voneinander gleiche Abstände aufweisen.
